Europäisches Patentamt

European Patent Office

Office européen des brevets

(11) Numéro de publication: **0 054 996**
**B1**

(12) **FASCICULE DE BREVET EUROPEEN**

(45) Date de publication du fascicule du brevet: **21.11.84**

(51) Int. Cl.³: **C 01 B 11/06**

(21) Numéro de dépôt: **81201345.6**

(22) Date de dépôt: **10.12.81**

(54) *Procédé et installation pour la préparation de solutions aqueuses concentrées d'hypochlorite de métal alcalin.*

(30) Priorité: **22.12.80 FR 8027409**

(43) Date de publication de la demande:
**30.06.82 Bulletin 82/26**

(45) Mention de la délivrance du brevet:
**21.11.84 Bulletin 84/47**

(84) Etats contractants désignés:
**AT BE CH DE FR GB IT LI NL SE**

(56) Documents cités:
**GB-A- 984 378**

**CHEMICAL ABSTRACTS, vol. 92, no. 10, mars 1980, page 147, colonne 2, résumé 78993v Columbus, Ohio, US
CHEMICAL ABSTRACTS, vol. 78, no. 6, 12 février 1973, page 135, colonne 2, résumé 32184q Columbus, Ohio, US**

(73) Titulaire: **SOLVAY & Cie (Société Anonyme)
Rue du Prince Albert, 33
B-1050 Bruxelles (BE)**

(72) Inventeur: **Verlaeten, Jean
Avenue Circulaire, 144A(Boîte 10)
B-1180 Bruxelles (BE)**
Inventeur: **Brahm, Jacques
Snoekgracht, 10
B-1850 Grimbergen (BE)**

Courier Press, Leamington Spa, England.

## Description

La présente invention a pour objet un procédé et une installation pour la préparation de solutions aqueuses concentrées d'hypochlorite de métal alcalin, par exemple d'hypochlorite de sodium, présentant un titre supérieur à 63 degrés chlorométriques.

Les extraits de javel du commerce sont des solutions aqueuses diluées d'hypochlorite de sodium, dont le titre est compris entre 30 et 70 degrés chlorométriques, habituellement entre 35 et 50 degrés chlorométriques.

Par définition, le titre d'une solution aqueuse d'hypochlorite de métal alcalin, en degrés chlorométriques, exprime le nombre de litres de chlore à 0°C et 1 bar, qui a le même pouvoir oxydant qu'un litre de la solution, à 20°C.

Il est connu de préparer des extraits de javel commerciaux en faisant réagir du chlore, éventuellement dilué avec de l'air, sur des solutions aqueuses d'hydroxyde de sodium. Les extraits de javel résultants sont alors des solutions aqueuses d'hypochlorite de sodium, contenant du chlorure de sodium dissous, et leur stabilité au cours du temps est généralement précaire.

Dans le but d'obtenir des extraits de javel commerciaux de stabilité améliorée, on a déjà proposé de produire d'abord une solution aqueuse concentrée d'hypochlorite de sodium, dont le titre est au moins égal à 70 degrés chlorométriques, ladite solution étant ensuite diluée jusqu'à obtention du titre requis pour les extraits de javel du commerce (brevet FR—A— 1 352 198—Société d'électro-chimie, d'électro-métallurgie et des aciéries électriques d'Ugine).

Dans la mise en oeuvre de ce procédé connu, la production de la solution aqueuse concentrée d'hypochlorite de sodium par réaction du chlore avec la solution aqueuse d'hydroxyde de sodium s'accompagne de la formation de cristaux de chlorure de sodium qu'il convient de séparer.

Généralement, la séparation des cristaux de chlorure de sodium de la solution concentrée d'hypochlorite de sodium présente de grandes difficultés, du fait de leur finesse.

Pour obvier à cet inconvénient, on propose, dans le brevet précité, de faire réagir le chlore et la solution aqueuse d'hydroxyde de sodium au sein d'un lit fluidisé de cristaux de chlorure de sodium, entretenu par une circulation ascendante d'une solution aqueuse d'hypochlorite de sodium. On recueille de la sorte, en tête du lit fluidisé, une solution aqueuse concentrée d'hypochlorite de sodium, sensiblement exempte de cristaux de chlorure de sodium, tandis que les gros cristaux de chlorure de sodium du lit sédimentent et sont recueillis au pied de celui-ci.

Ce procédé connu d'obtention de solutions aqueuses concentrées d'hypochlorite de sodium impose la mise en oeuvre d'un lit fluidisé, ce qui requiert des frais d'investissement élevés pour des appareils coûteux dont l'exploitation est par ailleurs difficile.

Par ailleurs, dans Chemical Abstracts, vol. 92, No. 10, mars 1980, page 147, colonne 2, résumé No. 78993 (demande de brevet JP—A—79118398—Asahi Glass), on décrit un procédé selon lequel on produit progressivement une solution aqueuse concentrée d'hypochlorite de sodium en faisant circuler une solution diluée d'hypochlorite de sodium et de chlorure de sodium entre une chambre de mélange où on l'additionne d'une solution concentrée d'hydroxyde de sodium et une chambre de réaction où on traite le mélange résultant avec un gaz contenant du chlore. Dans la chambre de réaction, il y a formation d'hypochlorite de sodium et cristallisation de chlorure de sodium qui précipite. Dès que la solution dans la chambre de réaction a atteint le titre recherché en hypochlorite de sodium, on arrête le procédé et on vidange la chambre de réaction pour en extraire la solution et les cristaux de chlorure de sodium.

Ce procédé connu présente le désavantage de ne pas pouvoir être adapté à une production continue de solutions d'hypochlorite de sodium de titre constant.

L'invention vise à remédier à ces inconvénients des procédés connus, en fournissant un procédé pour l'obtention de solutions aqueuses d'hypochlorite de métal alcalin de titre élevé qui permet une séparation aisée des cristaux de chlorure de sodium et qui puisse être mis en oeuvre dans une installation peu coûteuse, dont la conduite est aisée et dont le fonctionnement est fiable et adaptable à une production continue de solution.

L'invention concerne dès lors un procédé pour la préparation de solutions aqueuses concentrées d'hypochlorite de métal alcalin selon lequel, on met en oeuvre, dans une chambre de réaction, une suspension de cristaux de chlorure de métal alcalin dans une solution aqueuse d'hypochlorite de métal alcalin, on introduit une solution aqueuse d'hydroxyde de métal alcalin et un gaz contenant du chlore, dans la suspension aqueuse et on soutire une solution aqueuse d'hypochlorite de métal alcalin et des cristaux de chlorure de métal alcalin hors de la chambre de réaction; selon l'invention on introduit le gaz à la partie inférieure de la chambre de réaction en sorte d'y soumettre la suspension à un déplacement ascendant par gazosiphon, on soutire la suspension à la partie supérieure de la chambre de réaction et la sépare en au moins deux fractions, on recycle une des fractions à la base de la chambre de réaction et on sépare et recueille séparément la solution aqueuse d'hypochlorite de métal alcalin et les cristaux de chlorure de métal alcalin hors de l'autre fraction.

Dans le procédé selon l'invention, on entend, par solutions aqueuses concentrées d'hypochlorite de métal alcalin, des solutions d'hypochlorite de métal alcalin, par exemple d'hypochlorite de sodium ou de potassium dont le titre en chlore actif soit suffisamment élevé pour que leur obtention par réaction d'un gaz contenant du chlore avec une solution aqueuse d'hydroxyde de métal alcalin s'accompagne d'une cristallisation de chlorure de métal alcalin.

En règle générale, dans le cas où le procédé est mis en oeuvre à une température n'excédant pas 50°C, par exemple entre 25 et 35°C, un titre de 63 degrés chlorométriques est la valeur minimum à respecter.

On n'a généralement pas intérêt à ce que le titre de la solution d'hypochlorite de métal alcalin excède 140 degrés chlorométriques car au-delà de ce titre, la stabilité de la solution tend à décroître rapidement.

En pratique, on obtient généralement de bons résultats en fixant le titre de la solution concentrée d'hypochlorite de métal alcalin à produire, entre 70 et 140 degrés chlorométriques, les valeurs comprises entre 85 et 120 degrés chlorométriques étant préférées.

Pour l'exécution du procédé selon l'invention, on peut faire usage de chlore pur.

On préfère toutefois diluer le chlore avec un autre gaz, de manière à augmenter le volume global de gaz dans la chambre de réaction et à permettre de la sorte une augmentation de sa vitesse ascendante dans ladite chambre.

Le choix du gaz de dilution se fait parmi ceux qui ne réagissent pas avec le chlore ni avec l'hydroxyde de métal alcalin dans les conditions de marche du procédé. Il peut être, par exemple, de l'air.

Selon une forme de réalisation spécialement avantageuse de l'invention, on met en oeuvre un gaz résiduaire de la liquéfaction du chlore produit par électrolyse d'une saumure de chlorure de métal alcalin. Un tel gaz résiduaire contient habituellement, à titre de constituants principaux, du chlore, de l'anhydride carbonique et de l'air; la pression partielle du chlore dans ce gaz est d'habitude comprise entre 5 et 10% de la pression totale du gaz.

La solution aqueuse d'hydroxyde de métal alcalin que l'on met à réagir avec le chlore dans la chambre de réaction peut avantageusement être une solution aqueuse diluée contenant par exemple de 300 à 500 g d'hydroxyde de sodium ou de potassium par kg, obtenue par électrolyse d'une saumure sensiblement saturée de chlorure de sodium ou de potassium dans une cellule à cathode de mercure ou à membrane imperméable à diffusion cationique.

En variante, cette solution aqueuse diluée d'hydroxyde de métal alcalin peut être concentrée par évaporation, avant d'être mise à réagir avec le chlore dans la chambre de réaction.

La vitesse ascendante du gaz dans la chambre de réaction doit être suffisante pour assurer un déplacement ascendant de la suspension de cristaux dans la chambre de réaction et son soutirage hors de celle-ci. Elle est réglée notamment en fonction de sa teneur en chlore, de la concentration de la solution d'hydroxyde de sodium et de son débit d'alimentation dans la chambre de réaction, ainsi que des caractéristiques constructives de ladite chambre.

Des résultats satisfaisants sont en général obtenus avec des vitesses supérieures à 0,10 m/s, par exemple comprise entre 0,20 et 2,0 m/s.

Bien que la vitesse du gaz puisse être réglée de manière à laisser sédimenter les plus gros cristaux de chlorure de sodium dans le fond de la chambre de réaction, on préfère toutefois la choisir suffisamment élevée pour éviter une telle sédimentation.

Des vitesses préférées sont dès lors celles comprises entre 0,25 et 1,5 m/s, les résultats les meilleurs ayant été obtenus avec des vitesses comprises entre 0,50 et 1 m/s.

Dans le procédé selon l'invention, le recyclage, dans la chambre de réaction, d'une fraction de la suspension soutirée hors de celle-ci, assure l'obtention de cristaux de chlorure de métal alcalin qui peuvent ensuite être séparés facilement et de manière économique, de la solution concentrée d'hypochlorite de métal alcalin.

On a observé qu'au démarrage du procédé, le recyclage de la fraction de suspension provoque une croissance progressive des cristaux de chlorure de métal alcalin de la suspension et que leur distribution granulométrique se stabilise ensuite rapidement.

Le rapport entre le poids de la fraction de suspension recyclée et le poids total de la suspension soutirée hors de la chambre de réaction est choisi en fonction de la granulométrique que l'on souhaite obtenir pour les cristaux de chlorure de métal alcalin dans la suspension soutirée, lorsque le procédé a atteint un état de fonctionnement stationnaire.

Ce rapport est en général supérieur à une valeur critique minimum, en deça de laquelle le diamètre moyen des cristaux de chlorure de métal alcalin dans la suspension soutirée hors de la chambre de réaction, devient insuffisant pour permettre leur séparation de manière efficace et économique.

On a par ailleurs observé qu'il existe, pour ce rapport, une valeur critique supérieure, au-delà de laquelle une augmentation de ce rapport n'exerce plus d'influence sur la granulométrie des cristaux de chlorure de métal alcalin dans la suspension qui est soutirée de la chambre de réaction.

Les valeurs critiques inférieure et supérieure précitées dépendent d'un grand nombre de facteurs, parmi lesquels figurent notamment la hauteur de la chambre de réaction, la vitesse ascendante de la suspension, la teneur en chlore du gaz, le titre recherché pour la solution concentrée d'hypochlorite de métal alcalin et le choix du dispositif utilisé pour séparer les cristaux de chlorure de métal alcalin de ladite solution. Elles peuvent être déterminées, dans chaque cas particulier, par un travail de routine.

En général, on obtient des résultats satisfaisants dès que le débit pondéral de la fraction recyclée est au moins égal à 75% du débit pondéral total de la suspension aqueuse soutirée hors de la chambre de réaction. Des valeurs comprises entre 90 et 99,85% se sont révélées spécialement avantageuses, les valeurs supérieures à 98% ayant conduit aux meilleurs résultats.

La séparation des cristaux de chlorure de métal alcalin de la fraction de suspension aqueuse, qui n'est pas recyclée, peut être exécutée par toute technique connue adéquate, par exemple par filtration, par sédimentation et décantation ou par essorage.

Selon une forme de réalisation particulière de l'invention, avant de traiter la solution aqueuse d'hydroxyde de métal alcalin avec le gaz dans la chambre de réaction, on la soumet à un prétraitement avec du chlore pour y former de l'hypochlorite de métal alcalin dissous. Ce prétraitement est réglé de préférence de manière à éviter de cristalliser du chlorure de métal alcalin; il peut être réalisé avec un courant de gaz résiduel provenant de la chambre de réaction et contenant encore un peu de chlore.

Dans la mise en oeuvre du procédé selon l'invention, la chaleur produite par la réaction du chlore avec la solution d'hydroxyde de métal alcalin dans la chambre de réaction est évacuée vers l'extérieur.

Cette évacuation de chaleur peut être réalisée par tout moyen connu en soi, par exemple au moyen d'une manchette disposée autour de la chambre de réaction et parcourue par un fluide de refroidissement, ou au moyen d'un réfrigérant tubulaire logé à l'intérieur de la chambre de réaction.

Selon une forme de réalisation avantageuse du procédé selon l'invention, pour évacuer une partie au moins de la chaleur de réaction, on refroidit la fraction recyclée, avant de la réintroduire dans la chambre de réaction.

L'invention concerne également une installation pour la mise en oeuvre du procédé selon l'invention comprenant une enceinte, une colonne verticale ouverte à ses extrémités supérieure et inférieure et logée dans l'enceinte, un conduit d'admission d'un gaz contenant du chlore dans l'enceinte, un conduit d'admission d'une solution aqueuse d'hydroxyde de métal alcalin dans l'enceinte et un moyen d'extraction, hors de l'enceinte, de cristaux de chlorure de métal alcalin et d'une solution aqueuse d'hypochlorite de métal alcalin, le conduit d'admission du gaz débouchant dans la colonne près de son extrémité inférieure, et le moyen d'extraction comprenant un conduit qui débouche dans l'enceinte et qui est en communication avec un dispositif pour la séparation des cristaux de chlorure de métal alcalin et de la solution d'hypochlorite de métal alcalin.

Dans l'installation selon l'invention la zone de l'enceinte où on fait déboucher le conduit d'admission de la solution aqueuse d'hydroxyde de métal alcalin est de préférence choisie de manière que la suspension aqueuse sortant à la partie supérieure de la colonne soit approximativement exempte d'hydroxyde de métal alcalin.

Il s'est révélé spécialement avantageux de faire déboucher ce conduit dans la colonne, près de l'extrémité inférieure de celle-ci, de préférence au-dessus du conduit d'admission du gaz.

En variante, on peut aussi le faire déboucher dans l'enceinte, à l'extérieur de la colonne et au-dessous de la zone où débouche le conduit d'évacuation de la suspension.

Selon une forme de réalisation avantageuse de l'invention, l'installation comprend un réfrigérant en communication avec l'enceinte, via un conduit d'extraction d'une fraction de la suspension hors de l'enceinte et un conduit de retour de ladite fraction dans l'enceinte.

Les solutions aqueuses concentrées d'hypochlorite de métal alcalin obtenues au moyen du procédé et de l'installation selon l'invention présentent généralement une bonne stabilité dans le temps. Elle sont généralement destinées à être diluées avec de l'eau pour la production d'extraits de javel commerciaux ayant par exemple un titre compris entre 30 et 50 degrés chlorométriques.

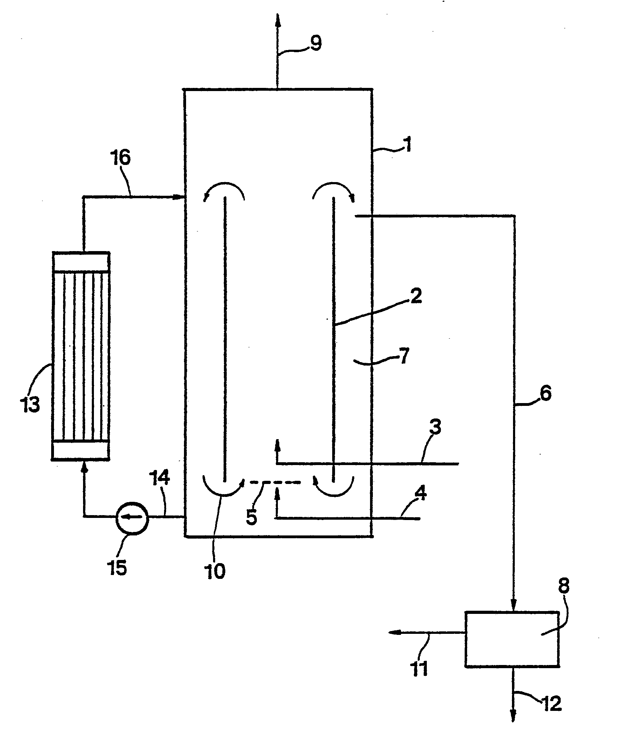

Des particularités et détails de l'invention ressortiront de la description suivante de la figure unique de dessin annexé, qui représente schématiquement, à titre d'exemple, une forme de réalisation particulière de l'installation selon l'invention.

L'installation représentée à la figure comprend une enceinte cylindrique verticale 1 dans laquelle est logée une colonne tubulaire axiale 2, ouverte à ses extrémités supérieure et inférieure.

La colonne 2 constitue la chambre de réaction proprement dite de l'installation; elle est en communication, dans sa partie inférieure, avec un conduit 3 d'admission d'une solution aqueuse d'hydroxyde de métal alcalin et avec un conduit vertical 4 d'admission d'un gaz contenant du chlore. Une grille de répartition 5 assure une distribution homogène du gaz en filets verticaux sur la section horizontale de la colonne 2.

Un conduit 6 débouche dans la zone annulaire 7 délimitée entre la paroi latérale de l'enceinte 1 et la colonne 2; elle sert à extraire une fraction de la solution aqueuse concentrée d'hypochlorite de métal alcalin formée dans la chambre de réaction et contenant des cristaux de chlorure de métal alcalin en suspension, et à la transférer dans un dispositif de filtration 8 pour en séparer les cristaux de chlorure de métal alcalin.

Pendant le fonctionnement de l'installation, la chambre de réaction 2 est remplie d'une solution aqueuse d'hypochlorite de métal alcalin, saturée en chlorure de métal alcalin, dans laquelle des cristaux de chlorure de métal alcalins sont dispersés. Cette suspension est entraînée vers le haut dans la chambre de réaction 2, par gazosiphon sous l'action du courant de gaz admis par le conduit 4. Simultanément, on y introduit une solution aqueuse d'hydroxyde de métal alcalin par le conduit 3.

Pendant le déplacement ascendant de la suspension et du gaz dans la chambre de réaction 2, le chlore du gaz réagit avec l'hydroxyde de métal alcalin pour produire de l'hypochlorite de métal alcalin et du chlorure de métal alcalin.

Il sort de la sorte, à l'extrémité supérieure ouverte de la chambre 2, une solution aqueuse concentrée d'hypochlorite de métal alcalin, dont le titre est supérieur à 63 degrés chlorométriques et qui contient des cristaux de chlorure de métal alcalin en suspension. Cette suspension aqueuse redescend dans la chambre annulaire 7, tandis que le gaz résiduel de la réaction s'échappe de l'installation par un conduit 9.

Une fraction de la suspension est soutirée de la chambre annulaire 7 par le conduit 6 et envoyée au dispositif de filtration 8, tandis que le fraction restante 10 est recyclée au bas de la chambre de réaction 2.

Dans le dispositif de filtration 8, on sépare un gâteau 11 de cristaux de chlorure de métal alcalin et on recueille une solution aqueuse concentrée d'hypochlorite de métal alcalin 12. Cette solution dont le titre est supérieur à 63 degrés chlorométriques, peut être par la suite diluée avec de l'eau, pour produire un extrait de javel commercial, présentant par exemple un titre d'environ 50 degrés chlorométriques.

L'installation comprend en outre un réfrigérant externe 13 couplé en dérivation à la chambre annulaire 7, via une conduite 14 et une pompe 15 pour l'extraction d'une fraction de la suspension aqueuse qui s'y trouve et une conduite 16 de recyclage.

Selon une variante, non représentée, de l'installation qui vient d'être décrite, le gaz résiduel recueilli en 9 est lavé avec la solution d'hydroxyde de métal alcalin, avant d'introduire celle-ci dans la chambre de réaction 2, de manière à absorber le chlore qu'il pourrait encore éventuellement contenir.

L'exemple d'application suivant va servir à illustrer davantage l'invention.

Dans une installation conforme à celle qui vient d'être décrite, on a traité une solution aqueuse contenant 33,5% en poids d'hydroxyde de sodium, avec un gaz constitué d'un mélange d'air et de chlore et contenant 5% en poids de chlore.

On a alimenté l'installation, via les conduits 4 et 6, respectivement avec des débits horaires de 2786 m³ normaux de gaz et 1603 kg de la solution d'hydroxyde de sodium, de manière à engendrer une vitesse ascendante de l'ordre de 0,70 à 0,80 m/s dans la chambre 2. La température dans celle-ci a été maintenue à environ 30°C.

La suspension aqueuse circulant de haut en bas dans la chambre annulaire 7 était une suspension de cristaux de chlorure de sodium dans une solution aqueuse d'hypochlorite de sodium présentant un titre voisin de 100 degrés chlorométriques; elle contenait 11% en poids de cristaux de chlorure de sodium.

On a soutiré, via le conduit 6, une fraction horaire de 2051 kg de cette suspension, que l'on a envoyée dans le dispositif de filtration 8, le solde, poursuivant sa circulation descendante dans la chambre annulaire 7 pour être recyclée, en 10, dans la chambre de réaction 2.

Dans le dispositif de filtration 8, on a séparé un gâteau de filtration 11 contenant, en poids, 80,1% de chlorure de sodium et 19,9% d'hypochlorite de sodium, et on a recueilli d'autre part 1775 kg par heure d'une solution aqueuse d'hypochlorite de sodium contenant, par kg, 257 g d'hypochlorite de sodium et 94 g de chlorure de sodium dissous.

## Revendications

1. Procédé pour la préparation de solutions aqueuses concentrées d'hypochlorite de métal alcalin, selon lequel on mélange une solution aqueuse d'hydroxyde de métal alcalin à une solution aqueuse d'hypochlorite de métal alcalin, on traite le liquide résultant avec un gaz contenant du chlore et on recueille une suspension de cristaux de chlorure de métal alcalin dans une solution aqueuse d'hypochlorite de métal alcalin, caractérisé en ce qu'on introduit la solution aqueuse d'hypochlorite de métal alcalin et la solution aqueuse d'hydroxyde de métal alcalin simultanément et de manière continue dans une chambre de réaction, on introduit le gaz dans la partie inférieure de la chambre de réaction, de manière continue et selon un courant ascendant de gaz, de manière à cristalliser dans la chambre, du chlorure de métal alcalin par réaction du chlore contenu dans le gaz avec l'hydroxyde de métal alcalin de la solution aqueuse d'hydroxyde de métal alcalin et à provoquer dans la chambre, jusqu'à la partie supérieure de celle-ci, un déplacement ascendant des deux solutions et de la suspension de cristaux résultant de la réaction, on soutire la suspension à la partie supérieure de la chambre de réaction et la sépare en au moins deux fractions, on recycle une des fractions, en dehors du courant de gaz ascendant, à la base de la chambre de réaction pour y reconstituer une partie au moins de la solution aqueuse d'hypochlorite de métal alcalin et on recueille séparément la solution aqueuse d'hypochlorite de métal alcalin et les cristaux de chlorure de métal alcalin de l'autre fraction.

2. Procédé selon la revendication 1, caractérisé en ce qu'on règle le débit de la fraction recyclée pour qu'elle soit au moins égale à 98% du débit de la suspension dans la chambre de réaction.

3. Procédé selon la revendication 1 ou 2, caractérisé en ce qu'on fixe la température de la suspension dans la chambre de réaction, entre 25 et 35°C.

4. Procédé selon l'une quelconque des revendications 1 à 3, caractérisé en ce qu'on règle la vitesse du gaz pour que la vitesse ascendante de la suspension aqueuse dans la chambre de réaction soit comprise entre 0,25 et 1,5 m/s.

5. Procédé selon l'une quelconque des revendications 1 à 4, caractérisé en ce qu'on met en oeuvre une solution aqueuse d'hydroxyde de métal alcalin contenant de 30 à 50% en poids d'hydroxyde de métal alcalin et un gaz ayant une pression partielle en chlore comprise entre 5 et 10% de la pression totale du gaz.

6. Procédé selon l'une quelconque des revendications 1 à 5, caractérisé en ce qu'on met en oeuvre une solution aqueuse d'hydoxyde de métal alcalin obtenue par électrolyse d'une saumure de chlorure de sodium.

7. Procédé selon l'une quelconque des revendications 1 à 6, caractérisé en ce qu'on soumet la solution aqueuse d'hydroxyde de métal alcalin à un prétraitement de chloration avec un courant de gaz résiduel de la chambre de réaction, en quantité réglée pour éviter une cristallisation de chlorure de métal alcalin.

8. Installation pour la préparation de solutions aqueuses concentrées d'hypochlorite de métal alcalin, comprenant une enceinte (1), une colonne verticale (2) ouverte à ses extrémités supérieure et inférieure et logée dans l'enceinte, un conduit (4) d'admission d'un gaz contenant du chlore dans l'enceinte, un conduit (3) d'admission d'une solution aqueuse d'hydroxyde de métal alcalin dans l'enceinte et un moyen d'extraction, hors de l'enceinte, de cristaux de chlorure de métal alcalin et d'une solution aqueuse d'hypochlorite de métal alcalin, caractérisée en ce que le conduit (4) d'admission du gaz débouche dans la colonne (2) près de son extrémité inférieure, et le moyen d'extraction comprend un conduit (6) qui débouche dans l'enceinte (1) et qui est en communication avec un dispositif (8) pour la séparation des cristaux de chlorure de métal alcalin et de la solution d'hypochlorite de métal alcalin.

9. Installation selon la revendication 8, caractérisée en ce que le conduit (3) d'admission de la solution d'hydroxyde de métal alcalin débouche dans la colonne (2), près de son extrémité inférieure.

10. Installation selon la revendication 8 ou 9, caractérisée en ce qu'elle comprend en outre un réfrigérant (13) en communication avec l'enceinte (1), via un conduit (14) d'extraction d'une fraction de la suspension hors de l'enceinte et un conduit (16) de retour de ladite fraction dans l'enceinte.

**Patentansprüche**

1. Verfahren zur Herstellung konzentrierter wässriger Alkalimetallhypochloritlösungen, wobei man eine wässrige Alkalimetallhydroxidlösung einer wässrigen Alkalimetallhypochloritlösung zumischt, die sich ergebende Flüssigkeit mit einem chlorhaltigen Gas behandelt und eine Suspension von Alkalimetallchlorid-Kristallen in einer wässrigen Alkalimetallhypochloritlösung gewinnt, dadurch gekennzeichnet, daß man die wässrige Alkalimetallhypochloritlösung und die wässrige Alkalimetallhydroxidlösung gleichzeitig und kontinuierlich in eine Reaktionskammer einführt, das Gas in den unteren Teil der Reaktionskammer kontinuierlich und mit aufsteigenden Gasstrom einführt, um in der Kammer durch Reaktion des in dem Gas enthaltenen Chlors mit dem Alkalimetallhydroxid der wässrigen Alkalimetallhydroxidlösung Alkalimetallchlorid auszukristallisieren und um in der Kammer bis zu deren oberen Teil eine aufsteigende Verdrängung der beiden Lösungen und der sich aus der Reaktion ergebenden kristallinen Suspension zu bewirken, man die Suspension von dem oberen Teil der Reaktionskammer abzieht und in mindestens 2 Fraktionen trennt, man eine der Fraktionen im Kreislauf zurückführt außerhalb des aufsteigenden Gasstromes zu dem Boden der Reaktionskammer um dort zumindest einen Teil der wässrigen Alkalimetallhypochloritlösung zu ersetzen, und man getrennt davon die wässrige Alkalimetallhypochloritlösung und die Kristalle des Alkalimetallchlorids der anderen Fraktion sammelt.

2. Verfahren gemäß Anspruch 1, dadurch gekennzeichnet, daß man die Menge der im Kreislauf geführten Fraktion so regelt, daß sie mindestens 98% der Menge der Suspension in der Reaktionskammer darstellt.

3. Verfahren gemäß Anspruch 1 oder 2, dadurch gekennzeichnet, daß man die Temperatur der Suspension in der Reaktionskammer zwischen 25 und 35°C hält.

4. Verfahren gemäß einem der Ansprüche 1 bis 3, dadurch gekennzeichnet, daß man die Geschwindigkeit des Gases so regelt, daß die aufsteigende Geschwindigkeit der wässrigen Suspension in der Reaktionskammer zwischen 0,25 und 1,5 m/s liegt.

5. Verfahren gemäß einem der Ansprüche 1 bis 4, dadurch gekennzeichnet, daß man eine wässrige Alkalimetallhydroxidlösung einsetzt enthaltend 30 bis 50 Gew.-% Alkalimetallhydroxid sowie ein Gas mit einem Partialdruck des Chlors zwischen 5 und 10% des gesamten Gasdrucks.

6. Verfahren gemäß einem der Ansprüche 1 bis 5, dadurch gekennzeichnet, daß man eine wässrige Alkalimetallhydroxidlösung einsetzt, die erhalten worden ist durch Elektrolyse einer Natriumchloridsole.

7. Verfahren gemäß einem der Ansprüche 1 bis 6, dadurch gekennzeichnet, daß man die wässrige Alkalimetallhydroxidlösung einer vorbehandelnden Chlorierung unterwirft mit einem Strom des Restgases aus der Reaktionskammer in einer geregelten Menge um eine Kristallisation von Alkalimetallchlorid zu vermeiden.

8. Vorrichtung zur Herstellung von wässrigen konzentrierten Alkalimetallhypochloritlösungen mit einem umschlossenen Raum (1), einer vertikalen Kolonne (2), die an ihren oberen und unteren Enden offen ist und sich innerhalb des umschlossenen Raums befindet, einer Leitung (4) zur Einführung eines chlorhaltigen Gases in den umschlossenen Raum, einer Leitung (3) zur Einführung einer wässrigen Alkalimetallhydroxidlösung in den umschlossenen Raum und Mitteln zum Abziehen außerhalb des umschlossenen Raums von Alkalimetallchlorid-Kristallen und einer wässrigen Alkalimetallhypochloritlösung, dadurch gekennzeichnet, daß die Leitung (4) für die Gaszuleitung in die Kolonne (2) mündet in der Nähe ihres unteren Endes und die Mittel zum Abziehen eine Leitung (6) aufweisen, die in den umschlossenen Raum (1) mündet und die in Verbindung steht mit einer Vorrichtung (8) zur Trennung der Alkalimetallchlorid-Kristalle von der Alkalimetallhypochloritlösung.

9. Vorrichtung gemäß Anspruch 8, dadurch gekennzeichnet, daß die Leitung (3) für die Einführung der Alkalimetallhydroxidlösung in die Kolonne (2) mündet in der Nähe ihres unteren Endes.

10. Vorrichtung gemäß Anspruch 8 oder 9, dadurch gekennzeichnet, daß sie außerdem eine Kühlvorrichtung (13) aufweist, die in Verbindung mit dem umschlossenen Raum (1) über eine Leitung (14) zum Abziehen einer Fraktion der Suspension außerhalb des umschlossenen Raumes und eine Leitung (16) zur Rückführung der besagten Fraktion in den umschlossenen Raum, steht.

## Claims

1. Process for the preparation of concentrated aqueous solutions of an alkali metal hypochlorite, according to which an aqueous alkali metal hydroxide solution is mixed with an aqueous alkali metal hypochlorite solution, the resulting liquid is treated with a gas containing chlorine and a suspension of crystals of alkali metal chloride in an aqueous alkali metal hypochlorite solution is collected, characterised in that the aqueous alkali metal hypochlorite solution and the aqueous alkali metal hydroxide solution are introduced simultaneously and continuously into a reaction chamber, the gas is introduced into the lower part of the reaction chamber continuously and as a rising stream of gas, so that alkali metal chloride crystallises in the chamber by reaction of the chlorine contained in the gas with the alkali metal hydroxide of the aqueous alkali metal hydroxide solution and so as to cause an ascending movement in the chamber, extending to the upper part of the chamber, of the two solutions and of the crystal suspension resulting from the reaction, the suspension is withdrawn from the upper part of the reaction chamber and is separated into at least two fractions, one of the fractions is recycled, away from the rising gas stream, to the bottom of the reaction chamber so as to reform there at least a part of the aqueous alkali metal hypochlorite solution, and the aqueous alkali metal hypochlorite solution and the alkali metal chloride crystals from the other fraction are collected separately.

2. Process according to Claim 1, characterised in that the flow rate of the recycled fraction is controlled to be at least 98% of the flow rate of the suspension in the reaction chamber.

3. Process according to Claim 1 or 2, characterised in that the temperature of the suspension in the reaction chamber is set to between 25 and 35°C.

4. Process according to any one of Claims 1 to 3, characterised in that the gas velocity is controlled so that the velocity of rise of the aqueous suspension in the reaction chamber is between 0.25 and 1.5 m/s.

5. Process according to any one of Claims 1 to 4, characterised in that an aqueous alkali metal hydroxide solution containing from 30 to 50% by weight of alkali metal hydroxide and a gas having a partial chlorine pressure which is between 5 and 10% of the total pressure of the gas are employed.

6. Process according to any one of Claims 1 to 5, characterised in that an aqueous alkali metal hydroxide solution obtained by electrolysis of a sodium chloride brine is employed.

7. Process according to any one of Claims 1 to 6, characterised in that the aqueous alkali metal hydroxide solution is subjected to a chlorination pretreatment with a stream of residual gas from the reaction chamber, in an amount which is controlled to avoid crystallisation of alkali metal chloride.

8. Installation for the preparation of concentrated aqueous alkali metal hypochlorite solutions, comprising a chamber (1), a vertical column (2) open at its upper and lower ends and seated in the chamber, a line (4) for admitting a gas containing chlorine into the chamber, a line (3) for admitting an aqueous alkali metal hydroxide solution into the chamber and a means of removing alkali metal chloride crystals and an aqueous alkali metal hypochlorite solution from the chamber, characterised in that the line (4) for admission of the gas opens into the column (2) close to its lower end, and the means of removal comprises a line (6) which opens into the chamber (1) and which communicates with a device (8) for separating the alkali metal chloride crystals and the alkali metal hypochlorite solution.

9. Installation according to Claim 8, characterised in that the line (3) for admitting the alkali metal hydroxide solution opens into the column (2) near its lower end.

10. Installation according to Claim 8 or 9, characterised in that it moreover comprises a cooler (13) communicating with the chamber (1) via a line (14) for removing a fraction of the suspension from the chamber and a line (16) for returning the said fraction into the chamber.